# FASCICULE DE BREVET EUROPEEN

(11) **EP 2 262 866 B1**
(45) Date de publication et mention de la délivrance du brevet: **11.07.2012**
(21) Numéro de dépôt: 09723851.3
(22) Date de dépôt: 26.03.2009
(51) Int. Cl.: C09D 5/44, B01J 19/00

(54) **PROCEDE D'ÉLECTROGREFFAGE LOCALISÉ SUR DES SUBSTRATS CONDUCTEURS OU SEMI-CONDUCTEURS EN PRÉSENCE D'UNE MICROÉLECTRODE**
VERFAHREN ZUR ÖRTLICHEN ELEKTRO-TRANSPLANTATION AUF LEITENDEN ODER HALBLEITENDEN SUBSTRATEN UNTER ANWESENHEIT EINER MIKROELEKTRODE
METHOD FOR LOCALISED ELECTRO-GRAFTING ON CONDUCTING OR SEMICONDUCTING SUBSTRATES IN THE PRESENCE OF A MICROELECTRODE

(30) Priorité: 28.03.2008 FR 0852055
(43) Date de publication de la demande: 22.12.2010
(73) Titulaire: Commissariat à l'Énergie Atomique et aux Énergies Alternatives, 75015 Paris (FR)
(72) Inventeur: CHARLIER, Julienne, F-91190 Gif Sur Yvette (FR); PALACIN, Serge, F-78180 Montigny Le Bretonneux (FR); GHORBAL, Achraf, F-91190 Gif Sur Yvette (FR); GRISOTTO, Federico, F-75013 Paris (FR)
(74) Mandataire: Ilgart, Jean-Christophe
(86) Numéro de dépôt international: PCT/EP2009/053608
(87) Numéro de publication internationale: WO 2009/118387

(56) Documents cités:
- WO-A-02/070148
- WO-A-03/018212
- WO-A-2007/099137
- FR-A- 2 843 757
- JUNFENG ZHOU ET AL: "Deposition of Conducting Polyaniline Patterns with the Scanning Electrochemical Microscope" JOURNAL OF THE ELECTROANALYTICAL CHEMISTRY, LAUSANNE, CH, vol. 144, no. 4, 1 janvier 1997 (1997-01-01), pages 1202-1207, XP008097475 ISSN: 0368-1874 cité dans la demande

## Description

### DOMAINE TECHNIQUE

La présente invention concerne le domaine des revêtements organiques de surface, lesdits revêtements étant sous la forme de films organiques.

Elle concerne, plus particulièrement, un procédé de préparation de tels revêtements organiques en présence d'une microélectrode et en mettant en oeuvre des solutions convenablement sélectionnées afin de permettre la formation simple et reproductible de films organiques par enduction sélective sur des surfaces conductrices ou semi-conductrices de l'électricité et notamment par électrogreffage.

### ÉTAT DE LA TECHNIQUE ANTÉRIEURE

A l'heure actuelle, il existe plusieurs techniques permettant la réalisation de films organiques minces sur des substrats, chacune reposant généralement sur une famille ou une classe de molécules adaptée.

Le procédé de formation d'un revêtement par centrifugation ou « spin coating » ne requiert pas d'affinité particulière entre les molécules déposées et le substrat d'intérêt, ce qui est également le cas des techniques apparentées de formation de revêtements par immersion (« dip coating ») ou de dépôt par vaporisation (« spray coating »). En effet, la cohésion du film déposé repose essentiellement sur les interactions entre les constituants du film qui peut, par exemple, être réticulé après dépôt pour en améliorer la stabilité. Ces techniques sont très versatiles, applicables à tout type de surface à couvrir, et très reproductibles. Cependant, elles ne permettent aucun greffage effectif entre le film et le substrat (il s'agit d'une simple physisorption). Les épaisseurs produites sont mal contrôlables notamment pour les dépôts les plus fins (inférieurs à 20 nanomètres) et rarement uniformes sur l'ensemble de la surface.

D'autres techniques de formation d'un revêtement organique à la surface d'un support, telles que le dépôt par plasma ou bien l'activation photochimique reposent sur un même principe : générer à proximité de la surface à couvrir des formes instables d'un précurseur, qui évoluent en formant un film sur le substrat. Si le dépôt par plasma ne requiert aucune propriété particulière de ces précurseurs, la photo-activation nécessite quant à elle l'utilisation de précurseurs photosensibles, dont la structure évolue sous irradiation lumineuse. Ces techniques donnent en général lieu à la formation de films adhérents, bien qu'il soit le plus souvent impossible de discerner si cette adhésion est due à une réticulation d'un film topologiquement fermé autour de l'objet ou à une réelle formation de liaisons à l'interface.

L'auto-assemblage de monocouches (SAM pour « Self Assembled Monolayers ») est une technique très simple à mettre en oeuvre qui requiert toutefois l'utilisation de précurseurs généralement moléculaires possédant une affinité suffisante pour la surface d'intérêt à revêtir. On parlera alors de couple précurseur-surface, tels les composés soufrés ayant une affinité pour l'or ou l'argent, les tri-halogéno silanes pour les oxydes comme la silice ou l'alumine, les polyaromatiques pour le graphite ou les nanotubes de carbone. Dans tous les cas, la formation du film repose sur une réaction chimique spécifique entre une partie du précurseur moléculaire (l'atome de soufre dans le cas des thiols par exemple) et certains sites « récepteurs » de la surface. Une réaction de chimisorption assure l'accrochage. Cependant, si les couples impliquant des surfaces d'oxyde peuvent donner lieu à la formation de films très solidement greffés (la liaison Si-O impliquée dans la chimisorption de tri-halogéno silanes sur silice est parmi les plus stables de la chimie), il n'en est rien lorsque l'on s'intéresse aux métaux ou aux semi-conducteurs sans oxyde.

L'électropolymérisation anodique consiste en la polymérisation d'espèces monomériques en présence d'électrons à proximité d'une surface conductrice ou semi-conductrice de l'électricité. La polymérisation conduit à la formation d'un film par précipitation au voisinage de la surface. Cependant, aucune liaison de nature covalente n'est créée entre la surface et le polymère, ceci a pour conséquence que les films obtenus ne présentent pas une résistance optimale aux agressions. Parmi les monomères utilisables selon cette technique, on peut notamment citer le pyrrole.

Le document FR2843757, se propose de répondre aux problèmes liés à l'électropolymérisation par réactions électro-suivies de monomères précurseurs de polymères conducteurs tels que le pyrrole, l'aniline, le thiophène. Il propose un procédé de garniture d'une surface conductrice ou semi-conductrice par un film polymère organique à partir d'un précurseur par greffage électro-initié du précurseur sur ladite surface par application sur cette surface d'un balayage de potentiels. La polymérisation électro-initiée est initiée par des sels de diazonium, de sulfonium, de phosphonium ou d'iodonium, en présence de monomères polymérisables par voie radicalaire tels que des monomères vinyliques.

Les revêtements organiques sont abondamment employés dans différents domaines techniques comme l'électronique ou la biologie. Considérant les développements récents dans ces secteurs, il devient aujourd'hui essentiel de maîtriser les procédés de revêtements aux échelles micrométrique et nanométrique, i.e. d'être capable de localiser aussi finement que possible ces revêtements en contrôlant aussi bien les positions, les écarts et la stabilité des zones modifiées. Parmi les différentes méthodes de modification de surface listées ci-dessus, aucune ne donne accès au greffage localisé et robuste de films organiques non conducteurs.

La microscopie électrochimique à balayage est une technique, qui, après deux décades de développement, est aujourd'hui basée sur de larges connaissances théoriques ainsi qu'un nombre important d'applications expérimentales. L'utilisation de cette technique a permis de réaliser des motifs organiques et inorganiques sur différents substrats avec une résolution micrométrique.

Zhou et coll. [J. Electrochem. Soc., 1997, 144, 4, 1202-1207] ont préparé des motifs de polyaniline (PANI) de taille micrométrique sur des surfaces de platine, d'or et de carbone par modification locale du pH à l'aide d'un microscope électrochimique à balayage (SECM). L'augmentation du pH permet de modifier le potentiel électrochimique de l'aniline et conduit ainsi à un dépôt de la polyaniline. La réalisation de dépôt avec une résolution micro jusqu'à nanométrique semble actuellement difficile. En effet, les auteurs ont constaté que la formation de H₂ au sein du milieu réactionnel était handicapante.

Mark et coll. [Chem. Mater., 2001, 13, 747-752] ont confirmé la possibilité de déposer des polymères conducteurs en appliquant la technique de microscopie électrochimique à balayage au polythiophène (PT). Les auteurs précisent en outre que de tels polymères présentent une grande latitude d'applications du fait de la modularité de leur conductivité et des variations concomitantes de leurs propriétés optiques. Ils ont ainsi montré qu'il était possible de déposer un film de PT à partir de thiophène par oxydation en milieu acide sur une surface de dioxyde de manganèse. La réaction semble conduire à la formation d'oligomères ne dépassant pas la taille d'octamères. Au mieux, les polymères formés correspondent à des chaînes de 20 à 30 unités. Par ailleurs, le procédé entraîne une électropolymérisation à proximité de l'électrode qui a pour effet d'affecter l'uniformité du potentiel appliqué.

Le dépôt de film de polypyrrole (PPy) a également été rapporté dans la littérature. Ici encore, il semble que la technique employée conduise à un simple dépôt sur la surface, et que, selon les conditions environnementales, le film formé s'avère particulièrement labile [Langmuir, 2004, 20, 9236-9241] et sensible.

Il apparaît que les procédés existants de localisation du greffage chimique d'électropolymères ne permettent, à ce jour, d'accéder qu'à des films de polymères conducteurs. En outre, il est notable que leur stabilité reste précaire.

Peu de techniques d'électrogreffage localisé de films isolants ont été développées. A ce titre, on peut notamment citer la demande internationale WO 02/070148 qui concerne des substrats hétérogènes dont les composants présentent des travaux de sortie différents. Dans cette demande, est notamment décrit un procédé de greffage localisé, sans masque, de molécules organiques susceptibles d'être électriquement activées, sur une surface composite comprenant des portions conductrices et/ou semi-conductrices de l'électricité, par mise en contact desdites molécules organiques avec ladite surface composite. Dans ce procédé, le greffage est réalisé électrochimiquement en une seule étape sur des zones choisies, définies, desdites portions conductrices et/ou semi conductrices. Lesdites zones sont portées à un potentiel supérieur ou égal à un potentiel électrique seuil déterminé par rapport à une électrode de référence, ledit potentiel électrique seuil étant le potentiel au-delà duquel se produit le greffage desdites molécules organiques. La sélectivité repose sur les propriétés qui sont données aux matériaux composant les différentes portions de la surface. Dans ces conditions il est souvent indispensable de faire subir un traitement spécifique aux zones sélectionnées.

Il semble qu'aujourd'hui les techniques d'électrogreffage localisé de films isolants ne sont pas faciles à mettre en oeuvre car elles nécessitent soit le traitement préalable des supports, soit l'utilisation de masques. Il existe donc un besoin, à ce jour insatisfait, de fournir un procédé permettant un accès simple à des films isolants, stables et liés solidement aux surfaces sous la forme de motifs micro et nanostructurés.

### EXPOSÉ DE L'INVENTION

La présente invention permet de résoudre les inconvénients des procédés et des revêtements de l'état de la technique.

La présente invention concerne un procédé de préparation d'un film organique sur une zone sélectionnée d'un substrat conducteur ou semi-conducteur de l'électricité, en présence d'une solution liquide contenant au moins un primaire d'adhésion organique et au moins un monomère polymérisable par voie radicalaire, différent du primaire d'adhésion organique, par application d'un potentiel électrique au substrat en présence d'une microélectrode polarisée. Le greffage est réalisé sélectivement sur au moins une partie de la surface à l'aide de ladite microélectrode.

L'invention concerne plus particulièrement un procédé de préparation d'un film organique sur une zone sélectionnée d'un substrat conducteur ou semi-conducteur de l'électricité, comprenant les étapes suivantes :
a) positionnement d'une microélectrode à proximité de la surface de la zone sélectionnée ;
b) mise en contact d'une solution liquide comprenant au moins un primaire d'adhésion organique et au moins un monomère polymérisable par voie radicalaire, différent dudit primaire d'adhésion, avec au moins ladite zone sélectionnée ;
c) polarisation de ladite microélectrode et de la surface dudit substrat, le potentiel électrique de la surface étant plus cathodique que le potentiel de réduction du primaire d'adhésion organique mis en oeuvre à l'étape (b).

En général, la séquence d'étapes est soit (a), (b) et (c), soit (a), (c) et (b).

Dans le cadre de la présente invention, on entend par « semi-conducteur », un matériau organique ou inorganique présentant une conductivité électrique intermédiaire entre les métaux et les isolants. Les propriétés de conductivité d'un semi-conducteur sont influencées principalement par les porteurs de charge (électrons ou trous) que présente le semi-conducteur. Ces propriétés sont déterminées par deux bandes d'énergie particulières appelées la bande de valence (correspondant aux électrons impliqués dans les liaisons covalentes) et la bande de conduction (correspondant aux électrons dans un état excité et capables de se déplacer dans le semi-conducteur). Le « gap » représente la différence d'énergie entre la bande de valence et la bande de conduction. Un semi-conducteur correspond également, à la différence des isolants ou des métaux, à un matériau dont la conductivité électrique peut être contrôlée, dans une large mesure, par ajout d'agents dopants qui correspondent à des éléments étrangers insérés dans la structure cristalline du semi-conducteur.

Le substrat mis en oeuvre dans le cadre du procédé selon l'invention peut présenter une quelconque surface habituellement utilisée en électrogreffage et avantageusement une surface inorganique. Une telle surface inorganique peut notamment être choisie parmi les matériaux conducteurs comme les métaux, les métaux nobles, les métaux oxydés, les métaux de transition, les alliages métalliques et par exemple Ni, Zn, Au, Ag, Cu, Pt, Ti et l'acier. La surface inorganique peut également être choisie parmi les matériaux semi-conducteurs comme Si, SiC, AsGa, Ga, etc....

Ainsi, ladite surface inorganique du substrat mis en oeuvre dans le procédé selon l'invention est généralement constituée d'un matériau choisi parmi les métaux, les métaux nobles, les métaux oxydés, les métaux de transition, les alliages métalliques et les matériaux semi-conducteurs.

Au sens de l'invention, une « microélectrode » (ME) correspond à une électrode dont au moins une des dimensions caractéristiques (le diamètre pour un disque) est au maximum de l'ordre de quelques dizaines de micromètres. Plus généralement, l'ensemble des dimensions d'une ME est au maximum de l'ordre de quelques dizaines de micromètres. Parmi les ME, on distingue les « ultramicroélectrodes » (UME) dont une des dimensions caractéristiques (diamètre pour un disque) est au maximum de l'ordre de quelques dizaines de nanomètres. Généralement au moins deux des dimensions d'une UME sont au maximum de l'ordre de quelques dizaines de nanomètres.

Dans les ME, le courant mesuré aux temps longs est stationnaire ou quasistationnaire (décroissance logarithmique). La chute ohmique est négligeable lorsque de telles électrodes sont utilisées. Aussi, il n'est pas nécessaire d'employer une électrode de référence comme habituellement en électrochimie.

A titre de microélectrode utilisable dans le cadre de la présente invention, il est possible d'employer la sonde d'un microscope à effet tunnel (STM) et avantageusement celle d'un microscope électrochimique à balayage (SECM) ou d'un microscope à force atomique en mode électrochimique (el-AFM). Avantageusement, on emploiera une ME, correspondant à la sonde d'un microscope, dont le diamètre est inférieure à 200 µm voire inférieure à 10 µm.

Par conséquent, la microélectrode mise en oeuvre dans le procédé objet de la présente invention est avantageusement choisie dans le groupe constitué par une ultramicroélectrode (UME), la sonde d'un microscope à effet tunnel (STM), la sonde d'un microscope électrochimique à balayage (SECM) ou la sonde d'un microscope à force atomique en mode électrochimique (el-AFM).

Le positionnement de la microélectrode lors de l'étape (a) du procédé objet de la présente invention est généralement effectué en plaçant la ME à la verticale de la surface de la zone sélectionnée. La ME est placée à une distance du substrat qui est déterminée, selon la méthode usuellement employée en microscopie électrochimique, à l'aide d'un médiateur électrochimique correspondant à un couple oxydant/réducteur connu tel que le système Fe³⁺/Fe²⁺. Une courbe, dite « courbe d'approche », correspondant à la valeur du courant du médiateur à la ME en fonction de la distance entre la ME et le substrat, est tout d'abord réalisée. La distance de travail (i.e. la distance entre la ME et la surface du support) choisie pour effectuer le procédé est celle pour laquelle le rapport entre la valeur de l'intensité du courant mesurée à la distance de travail et celle du courant mesurée à l'infini, i.e. loin de la surface, est compris entre 1,2 et 2,5. En général, une telle valeur correspond à une distance telle que le rapport entre la distance de travail et le rayon de la ME est compris entre 0,2 et 2. Généralement pour une ME dont le diamètre est compris entre 20 à 150 µm, la distance de travail sera comprise entre 15 et 25 µm et typiquement vers 20 µm.

Le terme « primaire d'adhésion organique » correspond, dans le cadre de la présente invention, à toute molécule organique susceptible, sous certaines conditions, de se chimisorber à la surface d'un support solide par réaction radicalaire, et notamment par électrogreffage, et comportant une fonction réactive vis-à-vis d'un autre radical après chimisorption.

Le primaire d'adhésion organique est avantageusement un sel d'aryle clivable choisi dans le groupe constitué par les sels d'aryle diazonium, les sels d'aryle d'ammonium, les sels d'aryle phosphonium, les sels d'aryle iodonium et les sels d'aryle sulfonium. Dans ces sels, le groupe aryle est un groupe aryle qui peut être représenté par R tel que défini ci-après.

Parmi les primaires d'adhésion organiques et notamment les sels d'aryle clivables, on peut en particulier citer les composés de formule (I) suivante :

R-N₂⁺, A⁻ (I)

dans laquelle :
- A représente un anion monovalent et,
- R représente un groupe aryle.

A titre de groupe aryle des sels d'aryle clivables et notamment des composés de formule (I) ci-dessus, on peut avantageusement citer les structures carbonées aromatiques ou hétéroaromatiques, éventuellement mono- ou polysubstituées, constituées d'un ou plusieurs cycles aromatiques ou hétéroaromatiques comportant chacun de 3 à 8 atomes, le ou les hétéroatomes pouvant être N, O, P ou S. Le ou les substituants peuvent contenir un ou plusieurs hétéroatomes, tels que N, O, F, Cl, P, Si, Br ou S ainsi que des groupes alkyles en C1 à C6 notamment.

Au sein des sels d'aryle clivables et notamment des composés de formule (I) ci-dessus, R est de préférence choisi parmi les groupes aryles substitués par des groupements attracteurs d'électrons tels que NO₂, COH, les cétones, CN, CO₂H, NH₂, les esters et les halogènes. Les groupes R de type aryle particulièrement préférés sont les radicaux nitrophényle et phényle.

Au sein des composés de formule (I) ci-dessus, A peut notamment être choisi parmi les anions inorganiques tels que les halogénures comme I⁻, Br⁻ et Cl⁻, les halogénoborates tels que le tétrafluoroborate, les perchlorates et les sulfonates et les anions organiques tels que les alcoolates et les carboxylates.

A titre de primaires d'adhésion organiques et, plus particulièrement, de composés de formule (I), il est particulièrement avantageux d'utiliser un composé choisi dans le groupe constitué par le tétrafluoroborate de phényldiazonium, le tétrafluoroborate de 4-nitrophényldiazonium, le tétrafluoroborate de 4-bromophényldiazonium, le chlorure de 4-aminophényldiazonium, le chlorure de 2-méthyl-4-chlorophényldiazonium, le tétrafluoroborate de 4-benzoylbenzènediazonium, le tétrafluoroborate de 4-cyanophényldiazonium, le tétrafluoroborate du 4-carboxyphényldiazonium, le tétrafluoroborate de 4-acétamidophényldiazonium, le tétrafluoroborate de l'acide 4-phénylacétique diazonium, le sulfate de 2-méthyl-4-[(2-méthylphényl)diazényl]benzènediazonium, le chlorure de 9,10-dioxo-9,10-dihydro-1-anthracènediazonium, le tétrafluoroborate de 4-nitronaphtalènediazonium et le tétrafluoroborate de naphtalènediazonium.

La concentration en primaire d'adhésion dans la solution liquide est variable et dépend du souhait de l'expérimentateur. Il est cependant recommandé de travailler à une concentration pour laquelle le primaire est entièrement soluble dans la solution liquide. Ainsi, par exemple, pour des sels d'aryle diazonium, la concentration sera typiquement comprise entre 10⁻³ et 5.10⁻² M.

Avantageusement, dans le cas où le primaire d'adhésion est un sel d'aryle diazonium, le pH de la solution est inférieur à 7, typiquement inférieur ou égal à 3. Il est recommandé de travailler à un pH compris entre 0 et 3. Si nécessaire, le pH de la solution peut être ajusté à la valeur désirée à l'aide d'un ou plusieurs agents acidifiants bien connus de l'homme du métier, par exemple à l'aide d'acides minéraux ou organiques tels que l'acide chlorhydrique ou l'acide sulfurique.

Le primaire d'adhésion est en général introduit en l'état dans la solution liquide telle que définie précédemment. Ainsi, dans une forme de mise en oeuvre particulière, le procédé selon la présente invention comporte une étape de préparation du primaire d'adhésion, notamment lorsque celui-ci est un sel d'aryle diazonium. De tels composés sont généralement préparés à partir d'arylamine, pouvant comporter plusieurs substituants amine, par réaction avec NaNO₂ en milieu acide. Pour un exposé détaillé des modes expérimentaux utilisables pour une telle préparation in situ, l'homme du métier pourra se reporter à la littérature ouverte [D. Belanger et al. (2006) Chem. Mater. Vol. 18 ; 4755-4763]. De préférence, le greffage sera alors réalisé directement dans la solution de préparation du sel d'aryle diazonium.

Les monomères polymérisables par voie radicalaire mis en oeuvre dans le cadre de la présente invention correspondent aux monomères susceptibles de polymériser en condition radicalaire après amorçage par une entité chimique radicalaire. Typiquement, il s'agit de molécules comportant au moins une liaison de type éthylénique. Les monomères vinyliques, notamment les monomères décrits dans la demande de brevet FR 05 02516 ainsi que dans le brevet FR 03 11491, sont particulièrement concernés.

Selon une forme de réalisation particulièrement avantageuse de l'invention, le ou les monomères polymérisables par voie radicalaire et notamment le ou les monomères vinyliques sont choisis parmi les monomères de formule (II) suivante : 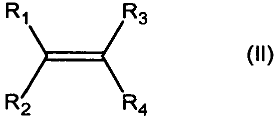 dans laquelle les groupes R₁ à R₄, identiques ou différents, représentent un atome monovalent non métallique tel qu'un atome d'halogène, un atome d'hydrogène, un groupe chimique saturé ou insaturé, tel qu'un groupe alkyle, aryle, un groupe -COOR₅ ou -OC(O)R₅ dans lequel R₅ représente un atome d'hydrogène ou un groupe alkyle en C₁-C₁₂ et de préférence en C₁-C₆, un nitrile, un carbonyle, une amine ou un amide.

Les monomères polymérisables par voie radicalaire et notamment les composés de formule (II) ci-dessus sont en particulier choisis dans le groupe constitué par les esters vinyliques tels que l'acétate de vinyle, l'acide acrylique, l'acrylonitrile, le méthacrylonitrile, le méthacrylate de méthyle, le méthacrylate d'éthyle, le méthacrylate de butyle, le méthacrylate de propyle, le méthacrylate d'hydroxyéthyle, le méthacrylate d'hydroxypropyle, le méthacrylate de glycidyle et leurs dérivés ; les acrylamides et notamment les méthacrylamides d'amino-éthyle, propyle, butyle, pentyle et hexyle, les cyanoacrylates, les di-acrylates et di-méthacrylates, les tri-acrylates et tri-méthacrylates, les tétra-acrylates et tétra-méthacrylates (tels que le pentaérythritol tetraméthacrylate), le styrène et ses dérivés, le parachloro-styrène, le pentafluoro-styrène, la N-vinyl pyrrolidone, la 4-vinyl pyridine, la 2-vinyl pyridine, les halogénures de vinyle, d'acryloyle ou de méthacryloyle, le di-vinylbenzène (DVB), et plus généralement les agents réticulants vinyliques ou à base d'acrylate, de méthacrylate, et de leurs dérivés.

Selon un mode de réalisation particulier, les monomères employés sont ceux qui, *a contrario* des composés solubles en toute proportion dans la solution liquide considérée, sont solubles jusqu'à une certaine proportion dans la solution, i.e. la valeur de leur solubilité dans cette solution est finie. Les monomères utilisables conformément au procédé de l'invention peuvent ainsi être choisis parmi les composés dont la solubilité dans la solution liquide est finie et plus particulièrement inférieure à 0,1 M, plus préférentiellement entre 5.10⁻² et 10⁻⁶ M. Parmi de tels monomères, on peut par exemple citer le méthacrylate de butyle dont la solubilité, mesurée dans les conditions normales de température et de pression, est d'environ 4.10⁻² M. Selon l'invention, et sauf indication contraire, les conditions normales de pression et de température (CNTP) correspondent à une température de 25°C et à une pression de 1.10⁵ Pa.

L'invention s'applique également à un mélange de deux, trois, quatre ou plus monomères différents choisis parmi les monomères précédemment décrits.

La quantité de monomères polymérisables par voie radicalaire dans la solution liquide peut varier en fonction du souhait de l'expérimentateur. Cette quantité peut être supérieure à la solubilité du monomère considéré dans la solution liquide employée et peut représenter par exemple de 18 à 40 fois la solubilité dudit monomère dans la solution liquide à une température donnée, généralement la température ambiante ou celle de réaction. Dans ces conditions, il est avantageux d'employer des moyens permettant la dispersion des molécules de monomère dans la solution liquide tels qu'un traitement aux ultrasons.

Dans le cadre de l'invention, un film organique correspond à tout film de nature organique, issu de plusieurs unités d'espèces chimiques organiques, lié de manière covalente à la surface du support sur lequel est mis en oeuvre le procédé objet de l'invention. Il s'agit particulièrement de films liés de manière covalente à la surface d'un support et comprenant au moins une couche d'unités structurales de nature similaire.

La solution liquide contenant, en plus du primaire d'adhésion, au moins un monomère polymérisable par voie radicalaire différent dudit primaire d'adhésion, le film organique obtenu selon le procédé de l'invention peut être polymère ou copolymère, issu de plusieurs unités monomériques d'espèces chimiques identiques ou différentes et/ou de molécules de primaire d'adhésion. Les films obtenus par le procédé de la présente invention sont « essentiellement » du type polymère dans la mesure où le film incorpore également des espèces issues du primaire d'adhésion et pas uniquement des monomères présents. Avantageusement, le film organique dans le cadre de l'invention présente une séquence en unités monomériques dans laquelle la première unité est constituée par un dérivé du primaire d'adhésion, les autres unités étant indifféremment dérivées des primaires d'adhésion et des monomères polymérisables.

Selon l'épaisseur du film, sa cohésion est assurée par les liaisons covalentes qui se développent entre les différentes unités. En particulier, l'invention a trait à des films organiques isolants et, plus spécifiquement, à des films polymères isolants. Dans la mesure où la conductivité des films organiques est basée sur la conjugaison électronique, qui a pour conséquence des transitions optiques à faible gap, un film organique sera typiquement considéré comme isolant si la valeur du coefficient d'extinction k mesurée par ellipsométrie d'impédance électrochimique est comprise entre 0 et 0,05.

La solution liquide, comprenant au moins un primaire d'adhésion et au moins un monomère polymérisable par voie radicalaire, mise en oeuvre dans le cadre de la présente invention peut en outre contenir un solvant. Il est préférable que le solvant employé soit un solvant protique. Par « solvant protique », on entend, dans le cadre de la présente invention, un solvant qui comporte au moins un atome d'hydrogène susceptible d'être libéré sous forme de proton dans des conditions non extrêmes.

Le solvant protique est avantageusement choisi dans le groupe constitué par l'eau, l'acide acétique, les solvants hydroxylés comme le méthanol et l'éthanol, les glycols liquides de faible poids moléculaire tels que l'éthylèneglycol, et leurs mélanges. Selon une forme de réalisation particulière de l'invention, un solvant protique pur peut être utilisé en mélange avec un solvant aprotique étant entendu que le mélange résultant présente les caractéristiques d'un solvant protique et sera à ce titre considéré comme tel.

La solution liquide, comprenant un primaire d'adhésion et un monomère polymérisable par voie radicalaire, mise en oeuvre dans le cadre de la présente invention peut en outre contenir au moins un électrolyte support. Ledit électrolyte support peut notamment être choisi parmi les sels d'ammoniums quaternaires tels que les perchlorates, les tosylates, les tetrafluoroborates, les hexafluorophosphates, les halogénures d'ammoniums quaternaires à chaîne courte, le nitrate de sodium et le chlorure de sodium.

Parmi ces sels d'ammoniums quaternaires on peut en particulier citer à titre d'exemple le perchlorate de tetraéthylammonium (TEAP), le perchlorate de tetrabutylammonium (TBAP), le perchlorate de tetrapropylammonium (TPAP), le perchlorate de benzyltriméthylammonium (BTMAP).

La solution liquide, comprenant un primaire d'adhésion et un monomère polymérisable par voie radicalaire, mise en oeuvre dans le cadre de la présente invention peut en outre contenir au moins un tensioactif et ce, notamment pour améliorer la solubilité du monomère polymérisable par voie radicalaire. Une description précise des tensioactifs utilisables dans le cadre de l'invention est donnée dans la demande de brevet FR 2 897 876 à laquelle l'homme du métier pourra se référer. Un seul tensioactif ou un mélange de plusieurs tensioactifs peut être utilisé.

Selon l'invention, il est préférable que le potentiel électrique employé à l'étape (c) du procédé selon la présente invention soit proche du potentiel de réduction du primaire d'adhésion mis en oeuvre et qui réagit en surface. Ainsi la valeur du potentiel électrique appliqué peut être jusqu'à 50% plus élevée que le potentiel de réduction du primaire d'adhésion, plus typiquement elle ne sera pas supérieure à 30%.

La polarisation de la microélectrode et de la surface dudit substrat peut être effectuée par toute technique connue de l'homme du métier et notamment en conditions de voltampérométrie linéaire ou cyclique, en conditions potentiostatiques, potentiodynamiques, intensiostatiques, galvanostatiques, galvanodynamiques ou par chronoampérométrie simple ou pulsée. Avantageusement, le procédé selon la présente invention est réalisé en conditions de chronoampérométrie statique ou pulsée. En mode statique, l'électrode est polarisée pour une durée généralement inférieure à 5 secondes, plus généralement durant 2 secondes. En mode pulsé, le nombre de pulsations sera compris, de manière préférentielle, entre 1 et 10 et, encore plus préférentiellement, entre 1 et 5, leur durée étant généralement de 50 à 150 ms, typiquement 100 ms.

Le procédé selon la présente invention peut ainsi notamment être réalisé dans une cellule d'électrolyse comportant différentes électrodes : une première électrode de travail constituant la surface destinée à recevoir le film, une contre électrode correspondant à la ME, ainsi qu'éventuellement une électrode de référence.

La microélectrode peut présenter des formes variées, elle peut notamment correspondre à un disque, une sphère, un hémisphère, une micropipette, un peigne inter-digité, un cône, un anneau, des anneaux concentriques ou encore une bande. Sa forme peut ainsi correspondre à un motif quelconque et être homothétique aux contours de la zone sélectionnée.

Selon une disposition particulière, plusieurs microélectrodes peuvent être employées simultanément sur un même substrat.

Selon un mode de réalisation particulier, le procédé comporte une étape supplémentaire de déplacement de la microélectrode à proximité de la zone sélectionnée. Avantageusement, cette étape supplémentaire (d) est mise en oeuvre après la séquence d'étapes (a), (b) et (c) ou (a), (c) et (b). Cette étape est utile lorsque la zone sélectionnée présente une surface sensiblement plus importante que celle de la surface de la ME. Selon cette modalité, il est ainsi possible d'établir à la surface du substrat des zones sélectionnées correspondant à des motifs complexes et vastes au regard de la taille de la ME.

Ce but peut également être atteint en utilisant plusieurs microélectrodes positionnées à proximité de la surface d'un substrat conducteur ou semi-conducteur sur lequel le film organique doit être préparé. La distance entre les microélectrodes sera choisie en fonction des motifs complexes à obtenir. L'utilisation simultanée de plusieurs microélectrodes lors de la mise en oeuvre du procédé permet de réaliser rapidement des motifs complexes sur une même surface. Des solutions liquides identiques ou différentes peuvent être utilisées dans cette variante. Avantageusement une seule solution liquide est employée.

Selon un autre mode de réalisation, le procédé comporte une étape supplémentaire (e) de fonctionnalisation du film organique ainsi préparé. La fonctionnalisation est réalisée à partir des fonctions organiques présentes à la surface du film organique préparé selon le procédé de la présente invention. En ce qui concerne la fonctionnalisation de films organiques, on peut notamment se reporter à la demande internationale WO 2004/005410.

L'invention concerne également l'utilisation d'un microscope, comme un microscope électrochimique, ou d'une microélectrode, pour greffer un film organique, typiquement isolant, sur une zone sélectionnée d'un substrat conducteur ou semi-conducteur de l'électricité. L'invention consiste également en l'utilisation simultanée de plusieurs microélectrodes pour greffer plusieurs films organiques, typiquement isolants, sur un ensemble de zones sélectionnées d'un substrat conducteur ou semi-conducteur de l'électricité.

Les films organiques obtenus par le procédé selon l'invention ne présentent pas une épaisseur uniforme. L'épaisseur de ces films organiques présente un profil caractéristique avec trois zones caractéristiques appelées « zone interne », « zone creuse » et « zone externe ». Ce profil caractéristique permet de distinguer les films organiques obtenus par le procédé objet de la présente invention des films organiques obtenus par les procédés de l'état de la technique. L'invention concerne aussi un film organique isolant greffé sur un substrat conducteur ou semi-conducteur, susceptible d'être préparé par un procédé tel que précédemment défini, l'épaisseur de ce film présentant au moins une zone interne de hauteur maximum h (i) et une zone externe de hauteur maximum h(e), avec h(i)<h(e), séparées par une zone creuse de hauteur maximum h(c) avec h (c) <h (i) . A titre d'exemple, les rapports de hauteur entre les différentes zones pourront avoir les valeurs suivantes : h(i)/h(e) = 0,5 et h(c)/h(i) = 0,8. Typiquement, le diamètre respectif de la zone interne et de la zone externe correspond environ à deux et trois fois celui de la ME employée pour leur formation.

L'utilisation de microélectrodes permet de réaliser des réactions dans des volumes restreints, également avec des milieux très concentrés en espèces réactives et mais aussi sans support d'électrolyte.

Le procédé exposé permet de réaliser sur de nombreuses surfaces des motifs organiques d'une grande complexité. La mise en oeuvre du procédé sur une même surface pour former des films organiques de nature différente permet en outre d'accéder à des revêtements qu'il est possible de fonctionnaliser de façon sélective en rapport avec les fonctions chimiques présentes.

L'invention sera mieux comprise à la lecture des exemples qui suivent qui n'ont d'autre but que de l'illustrer et ne doivent en aucune manière être compris comme une limitation de sa portée.

### BRÈVE DESCRIPTION DES DESSINS

La figure 1 représente schématiquement la formation de motifs en forme de point (a) ou de ligne (b) à la surface d'un substrat à l'aide d'un primaire, un sel de diazonium (ArN₂), et d'un monomère, ici l'acide acrylique (AAc).
La figure 2 correspond à une image d'une surface greffée obtenue par microscopie optique après le greffage par chronoampérométrie statique en fonction du diamètre de la ME : 25 µm (figure 2a), 50 µm (figure 2b) et 100 µm (figure 2c).
La figure 3 correspond à un histogramme illustrant le rapport existant entre la taille de la surface greffée, pour des zones différentes, par chronoampérométrie statique et le diamètre de la ME.
La figure 4 correspond à des spectres infrarouge obtenus après traitement sur différentes parties de la surface : hors de la zone de greffage (figure 4a), dans la zone interne après rinçage et exposition aux ultrasons (figure 4b) et dans la zone interne avant rinçage (figure 4c).
La figure 5 correspond à une image d'une surface greffée obtenue par microscopie optique après le greffage par chronoampérométrie en mode dynamique, la ME étant en mouvement.
La figure 6 présente des images d'une surface greffée obtenue par microscopie optique après le greffage par chronoampérométrie pour différentes hauteurs d'une ME de 100 µm de diamètre (figure 6a) et d'une ME de 25 µm de diamètre (figure 6b).
La figure 7 correspond à une image d'une surface greffée obtenue par microscopie optique après le greffage par chronoampérométrie de deux monomères vinyliques différents avec une ME de 10 µm de diamètre.

### EXPOSÉ DÉTAILLÉ DE MODES DE RÉALISATION PARTICULIERS

Les expériences exposées ci-après ont été réalisées à l'aide d'une ME de platine ayant la forme d'un disque, celle-ci a été préparée selon un protocole standard.

Afin de réaliser une électrode, l'extrémité d'un capillaire de verre (borosilicate) a tout d'abord été scellée de telle manière qu'elle présente une forme conique, puis, un fil de platine droit (pur à 99,9 %, Goodfellow, Royaume Unis) de 100, 50, 25, ou 10 µm de diamètre a été introduit dans le capillaire et la seconde extrémité du capillaire a alors été scellée dessus.

Le fil « scellé » a ensuite été connecté à un fil plus épais à l'aide d'une soudure à l'étain. Le dispositif a ensuite été poli avec du papier de verre de rugosité croissante (taille de grain de 600 puis 1200, soit un diamètre moyen de 15 µm et 5 µm respectivement), de telle sorte que la valeur du rapport (RG) du rayon total de la ME (verre + fil) sur le rayon de la surface métallique soit inférieur à 10 (typiquement 2,6 < RG < 7,6) et que la surface métallique soit lisse.

Avant leur utilisation, les ME ont été lavées dans de l'eau ultra-pure (Milli-Q) et exposées aux ultrasons. La qualité des ME a été testée à l'aide du système (Fe(CN) ₆³⁻/Fe(CN) ₆4⁻) car il présente un transfert électronique rapide. Les ME ont été considérées comme présentant une qualité satisfaisante lorsqu'un voltamogramme à l'état stationnaire, réalisé pour un potentiel variant à 0,25 V (en référence à une électrode d'Ag) à 0,4 V, avec une sensibilité du courant de 100 nA, était superposable à celui obtenu pour une variation identique de potentiel en sens inverse.

Les expériences ont été menées dans une cellule électrochimique en téflon à l'aide d'un microscope électrochimique à balayage SECM370 (Uniscan Instrument). Les déplacements de la sonde du microscope, et par extension de la ME, ont été réalisés à l'aide d'un dispositif commandé par informatique permettant une précision remarquable à l'échelle micrométrique. La valeur du potentiel et son ajustement ainsi que les mesures du courant ont été assurés par un potentiostat/galvanostat intégré au microscope.

La courbe d'approche sur l'axe des z, i.e. la distance entre la sonde et la surface de l'échantillon, et la planéité selon l'axe X-Y de la surface de l'échantillon, ont été réglées à partir de la valeur de potentiel correspondant au plateau de réduction d'une solution aqueuse de Fe (CN) ₆³⁻ (5.10⁻³ M, KC1 0,1 M). La solution permettant le réglage a ensuite été évacuée et l'ensemble du dispositif a été rincé à l'eau ultra-pure.

L'électrogreffage a été réalisé en employant un système standard à trois électrodes : l'électrode de travail étant constituée d'une lame de verre (Pyrex^{®}) recouvert de 2 nm de chrome et 100 nm d'or (pur à 99,9 %) déposés sous vide, l'électrode de référence étant pour sa part constituée d'un fil d'argent (1 mm de diamètre) et la ME employée correspondant à la contre électrode du système. Le positionnement de la ME par rapport à la surface de l'échantillon a été réalisé en étudiant le courant de réduction au niveau de l'électrode pour la solution de réglage en fonction de la distance d à la surface de l'échantillon, i.e. l'électrode de travail. Les résultats exposés plus loin ont été obtenus pour une distance fixée à 20 µm.

Sauf précision contraire, la solution électrolytique correspondait à 300 µl d'un mélange d'une solution aqueuse d'acide acrylique commercial (0,7 M), de tétrafluoroborate de 4-nitrobenzènediazonium (2.10⁻³ M) dans une solution aqueuse de H₂SO₄ (0,25 M, de qualité analytique), pour une surface exposée de l'échantillon de 0,2 cm².

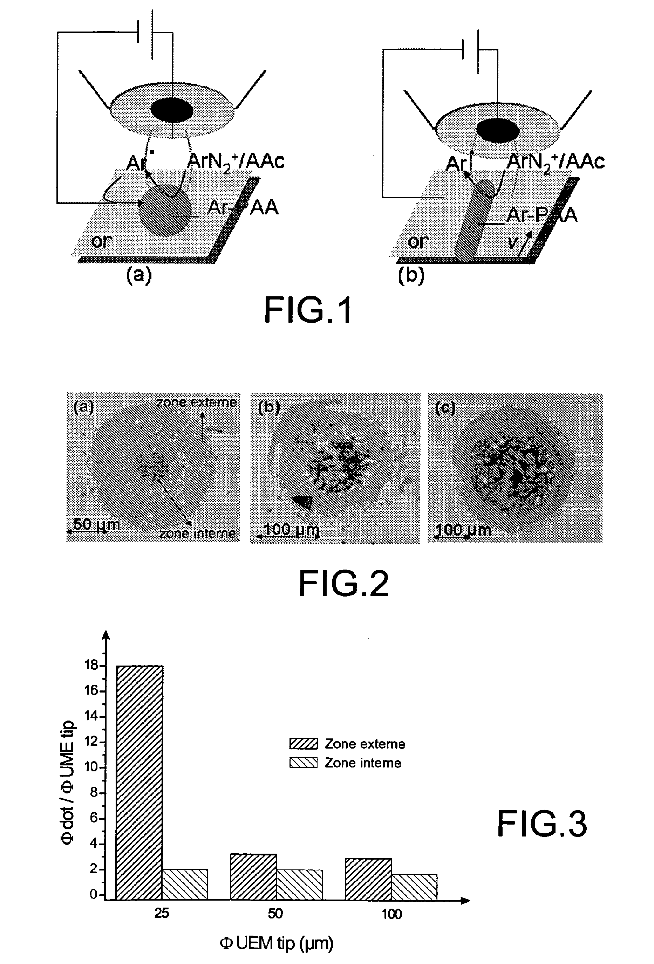

L'électrogreffage a été effectué par technique chronoampérométrique, continue et pulsée, en appliquant un potentiel de - 0,8 V par rapport à l'électrode de référence employée (Ag). La sonde du SECM a été employée en mode statique pour former des motifs en forme de point et en mode dynamique pour former des motifs en forme de ligne à la surface de l'électrode de travail, comme illustré à la figure 1. Tous les échantillons ont été rincés sous ultrasons avec de l'éthanol et de l'eau avant analyse.

Les films greffés ont été observés par microscopie optique (appareil LEICA DMLM avec une caméra CCD Leica DFC 320) et analysés par spectrométrie des photo-électrons X (XPS)(Kratos Axis Ultra DLD, Al Kα source monochromatique) et spectrométrie infrarouge en mode rélexion-absorption (Bruker IFS66 couplé à un microscope HYPERION™ 3000). Le polymère qui a été employé ici présente des caractéristiques spectroscopiques qui permettent de suivre sa croissance à la surface de l'électrode.

### I - Electrode immobile

La chronoampérométrie pulsée (4 impulsions de 100 ms à - 0,8 V séparées chacune d'un intervalle de 10 ms) a permis de former localement un polymère électrogreffé qui est visible en microscopie optique quel que soit le diamètre de la ME employé comme représenté à la figure 2.

La forme du motif qui a été greffé est homothétique de celle de la ME. Deux zones peuvent être distinguées : une zone interne et une zone externe dont les diamètres respectifs correspondent environ à deux et trois fois celui de la ME.

La taille de la zone externe peut être accrue en diminuant la taille de la ME comme montré à la figure 3. Cette dernière représente la variation du diamètre de chacune des zones en fonction de celui de la ME. Le diamètre de la zone interne est de l'ordre de 2 fois celui de la ME, le diamètre de la zone externe augmente fortement lorsqu'on passe de la ME de 100 µm à celle de 25 µm.

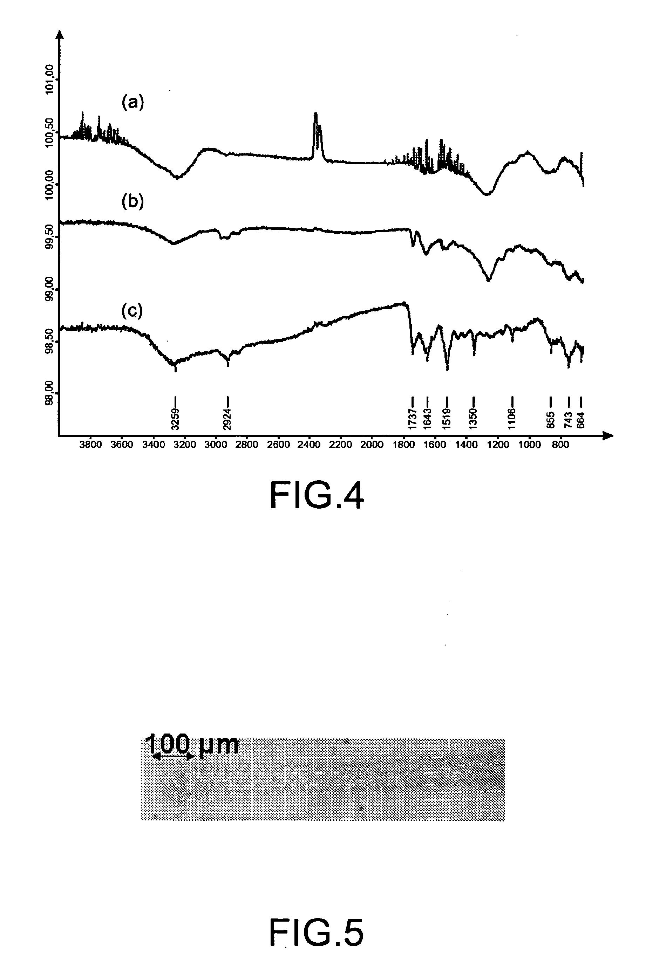

La présence des bandes caractéristiques du polynitrophénylène (1530 and 1350 cm⁻¹ pour NO₂ et 1600 cm⁻¹ pour le groupe phényle) et de l'acide polyacrylique (1730 cm⁻¹ pour le groupe carbonyle), ou PAA, lors des mesures infrarouge, confirme que le greffage du PAA a bien eu lieu comme illustré à la figure 4.

L'épaisseur du film qui a été obtenu, mesurée par AFM, est d'environ 60 nm au niveau de la zone interne et 110 nm pour la zone externe, la zone la plus épaisse correspondant au périmètre extérieur de la zone interne. La transition entre la zone interne et la zone externe n'est pas linéaire et une zone de « creux » est présente entre les deux zones.

Une analyse XPS a été réalisée (400 x 400 µm), pour les niveaux de coeur de Au 4f, N 1s, O 1s, C 1s, sur le motif greffé à l'aide d'une ME de 100 µm de diamètre. Il est apparu que le film est essentiellement composé de polynitrophénylène en périphérie et que l'acide polyacrylique est majoritairement présent autour du périmètre de la zone interne. L'analyse du profil XPS permet de déterminer l'existence de 6 zones distinctes en fonction de l'intensité de chacun des éléments (Au, C, N et O). En zones (1) et (6), situées hors des zones principales, l'or est l'élément prédominant. En zones (2) et (5), soit entre la zone interne et la zone externe, C, N et O sont majoritairement présents. En zone 3, il semble que le revêtement organique soit plus fin car le signal de l'or est plus important. Enfin, en zone (4) qui correspond au creux entre la zone interne et la zone externe, le signal de l'or est de nouveau important.

### II - Electrode en mouvement

En mode dynamique, la ME a été déplacée sur une distance de 2,2 mm à une hauteur constante de 20 µm par rapport à la surface de l'échantillon à une vitesse de 50 um. s⁻¹. Le système a été polarisé à - 0,8 V comme précédemment durant le procédé.

La ligne de film greffé présente une zone interne d'environ 80 µm de large et de 110 µm pour la zone externe ainsi que l'illustre la figure 5.

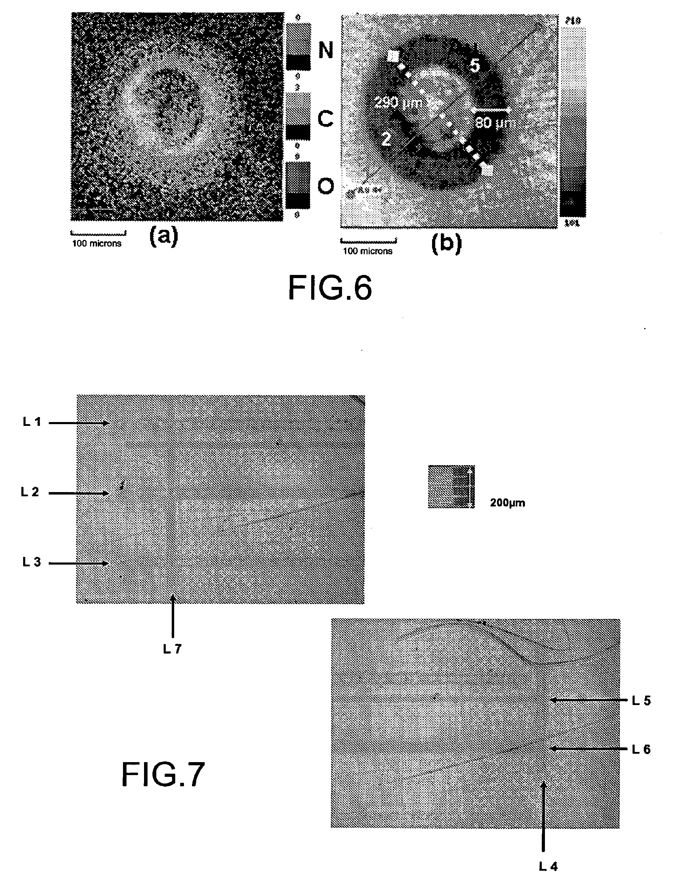

La même expérience a été menée en déplaçant la ME à différentes hauteurs, de d/a = 0,2 à d/a = 1,4, d représentant la distance de travail et a le rayon de la ME, comme illustrée à la figure 6. Sur les figures 6a et 6b, on peut constater que la variation de la hauteur n'entraîne pas de changement significatif dans la forme des films greffés.

Les mêmes expériences ont été réalisées avec succès à l'aide d'un AFM présentant une sonde, la ME, de 100 nm de large, et ont conduit à des motifs greffés de 200 nm de large.

### III - Films multiples

Sur une même surface d'or, différents films ont été greffés à l'aide d'une ME de 10 µm de diamètre en déplacement et selon un protocole similaire à celui précédemment exposé. La solution électrolytique mentionnée précédemment a été employée ainsi qu'une solution dans laquelle le 2-hydroxyéthyl-méthacrylate (HEMA) a été substitué à l'acide acrylique (AA). L'image obtenue par microscopie optique après le traitement est représentée à la figure 7, les modalités suivantes ont été appliquées pour former les films repérés L1 à L6 (vitesse de déplacement de l'électrode, distance à la surface et monomère) :

| Film | Vitesse (µm/s) | Distance (µm) | monomère |
|---|---|---|---|
| L1 | 5 | 6 | HEMA |
| L2 | 50 | 6 | HEMA puis AA |
| L3 | 100 | 6 | HEMA |
| L4 | 30 | 6 | HEMA |
| L5 | 50 | 10 | AA |
| L6 | 5 | 10 | AA puis HEMA |
| L7 | 30 | 6 | AA |

Pour les films L2 et L6 la ME a été employée deux fois de suite selon le même parcours.

## Revendications

1. Procédé de préparation d'un film organique sur une zone sélectionnée d'un substrat conducteur ou semi-conducteur de l'électricité, en présence d'une solution liquide contenant au moins un primaire d'adhésion organique et au moins un monomère polymérisable par voie radicalaire, différent du primaire d'adhésion organique, par application d'un potentiel électrique au substrat en présence d'une microélectrode polarisée.

2. Procédé selon la revendication 1, **caractérisé en ce que** ledit procédé comprend les étapes suivantes :
a) positionnement d'une microélectrode à proximité de la surface de la zone sélectionnée ;
b) mise en contact d'une solution liquide comprenant au moins un primaire d'adhésion organique et au moins un monomère polymérisable par voie radicalaire, différent dudit primaire d'adhésion, avec au moins ladite zone sélectionnée ;
c) polarisation de ladite microélectrode et de la surface dudit substrat, le potentiel électrique de la surface étant plus cathodique que le potentiel de réduction du primaire d'adhésion organique mis en oeuvre à l'étape (b),
la séquence d'étapes étant soit (a), (b) et (c), soit (a), (c) et (b).

3. Procédé selon l'une quelconque des revendications 1 ou 2, **caractérisé en ce que** ledit substrat présente une surface inorganique, avantageusement constituée d'un matériau choisi parmi les métaux, les métaux nobles, les métaux oxydés, les métaux de transition, les alliages métalliques et les matériaux semi-conducteurs.

4. Procédé selon l'une quelconque des revendications 1 à 3, **caractérisé en ce que** ladite microélectrode est choisie dans le groupe constitué par une ultramicroélectrode (UME), la sonde d'un microscope à effet tunnel (STM), la sonde d'un microscope électrochimique à balayage (SECM) et la sonde d'un microscope à force atomique en mode électrochimique (el-AFM).

5. Procédé selon l'une quelconque des revendications 2 à 4, **caractérisé en ce que**, lors de ladite étape (a), ladite microélectrode est placée à la verticale de la surface de ladite zone sélectionnée.

6. Procédé selon l'une quelconque des revendications précédentes, **caractérisé en ce que** ledit primaire d'adhésion organique est un sel d'aryle clivable choisi dans le groupe constitué par les sels d'aryle diazonium, les sels d'aryle d'ammonium, les sels d'aryle phosphonium, les sels d'aryle iodonium et les sels d'aryle sulfonium.

7. Procédé selon l'une quelconque des revendications précédentes, **caractérisé en ce que** ledit primaire d'adhésion organique est un composé de formule (I) suivante :
R-N₂⁺, A⁻ (I)
dans laquelle :
- A représente un anion monovalent avantageusement choisi parmi les anions inorganiques, les halogénoborates et les anions organiques et,
- R représente un groupe aryle avantageusement choisi parmi les structures carbonées aromatiques ou hétéroaromatiques, éventuellement mono-ou polysubstituées, constituées d'un ou plusieurs cycles aromatiques ou hétéroaromatiques comportant chacun de 3 à 8 atomes, le ou les hétéroatomes pouvant être N, O, P ou S, le ou les substituants pouvant contenir un ou plusieurs hétéroatomes ou des groupes alkyles en C1 à C6.

8. Procédé selon l'une quelconque des revendications précédentes, **caractérisé en ce que** ledit primaire d'adhésion organique est choisi dans le groupe constitué par le tétrafluoroborate de phényldiazonium, le tétrafluoroborate de 4-nitrophényldiazonium, le tétrafluoroborate de 4-bromophényldiazonium, le chlorure de 4-aminophényldiazonium, le chlorure de 2-méthyl-4-chlorophényldiazonium, le tétrafluoroborate de 4-benzoylbenzènediazonium, le tétrafluoroborate de 4-cyanophényldiazonium, le tétrafluoroborate du 4-carboxyphényldiazonium, le tétrafluoroborate de 4-acétamidophényldiazonium, le tétrafluoroborate de l'acide 4-phénylacétique diazonium, le sulfate de 2-méthyl-4-[(2-méthylphényl)diazényl]benzènediazonium, le chlorure de 9,10-dioxo-9,10-dihydro-1-anthracènediazonium, le tétrafluoroborate de 4-nitronaphtalènediazonium et le tétrafluoroborate de naphtalènediazonium.

9. Procédé selon l'une quelconque des revendications précédentes, **caractérisé en ce que** ledit monomère polymérisable par voie radicalaire est une molécule comportant au moins une liaison de type éthylénique, avantageusement de formule (II) suivante : 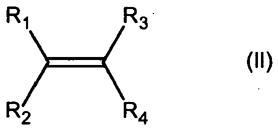 dans laquelle les groupes R₁ à R₄, identiques ou différents, représentent un atome monovalent non métallique tel qu'un atome d'halogène, un atome d'hydrogène, un groupe chimique saturé ou insaturé, tel qu'un groupe alkyle, aryle, un groupe -COOR₅ ou -OC(O)R₅ dans lequel R₅ représente un atome d'hydrogène ou un groupe alkyle en C₁-C₁₂ et de préférence en C₁-C₆, un nitrile, un carbonyle, une amine ou un amide.

10. Procédé selon l'une quelconque des revendications précédentes, **caractérisé en ce que** ledit monomère polymérisable par voie radicalaire est choisi dans le groupe constitué par les esters vinyliques tels que l'acétate de vinyle, l'acide acrylique, l'acrylonitrile, le méthacrylonitrile, le méthacrylate de méthyle, le méthacrylate d'éthyle, le méthacrylate de butyle, le méthacrylate de propyle, le méthacrylate d'hydroxyéthyle, le méthacrylate d'hydroxypropyle, le méthacrylate de glycidyle et leurs dérivés ; les acrylamides et notamment les méthacrylamides d'amino-éthyle, propyle, butyle, pentyle et hexyle, les cyanoacrylates, les di-acrylates et di-méthacrylates, les tri-acrylates et tri-méthacrylates, les tétra-acrylates et tétra-méthacrylates, le styrène et ses dérivés, le parachloro-styrène, le pentafluoro-styrène, la N-vinyl pyrrolidone, la 4-vinyl pyridine, la 2-vinyl pyridine, les halogénures de vinyle, d'acryloyle ou de méthacryloyle, le di-vinylbenzène (DVB), et plus généralement les agents réticulants vinyliques ou à base d'acrylate, de méthacrylate, et de leurs dérivés.

11. Procédé selon l'une quelconque des revendications précédentes, **caractérisé en ce que** ladite solution liquide contient en outre un solvant.

12. Procédé selon la revendication 11, **caractérisé en ce que** ledit solvant est un solvant protique avantageusement choisi dans le groupe constitué par l'eau, l'acide acétique, les solvants hydroxylés comme le méthanol et l'éthanol, les glycols liquides de faible poids moléculaire tels que l'éthylèneglycol, et leurs mélanges.

13. Procédé selon l'une quelconque des revendications précédentes, **caractérisé en ce que** ladite solution liquide contient en outre au moins un électrolyte support et/ou au moins un tensioactif.

14. Procédé selon l'une quelconque des revendications 2 à 13 **caractérisé en ce que** ledit potentiel électrique à l'étape (c) est proche du potentiel de réduction du primaire d'adhésion.

15. Procédé selon l'une quelconque des revendications 2 à 14, **caractérisé en ce que** ledit potentiel électrique à l'étape (c) est jusqu'à 50% plus élevé que le potentiel de réduction du primaire d'adhésion.

16. Procédé selon l'une quelconque des revendications 2 à 15, **caractérisé en ce que** ledit procédé comporte une étape supplémentaire de déplacement de ladite microélectrode à proximité de ladite zone sélectionnée.

17. Procédé selon l'une quelconque des revendications 2 à 16, **caractérisé en ce que** ledit procédé comporte une étape supplémentaire de fonctionnalisation du film organique préparé.

18. Film organique isolant greffé sur un substrat conducteur ou semi-conducteur, susceptible d'être préparé par un procédé tel que défini à l'une quelconque des revendications 1 à 17, **caractérisé en ce que** l'épaisseur dudit film présente au moins une zone interne de hauteur maximum h(i) et une zone externe de hauteur maximum h(e), avec h (i) <h (e), séparées par une zone creuse de hauteur maximum h(c) avec h(c)<h(i).

19. Procédé selon l'une quelconque des revendications 1 à 17, **caractérisé en ce que** ledit procédé est réalisé dans une cellule d'électrolyse à 3 électrodes avec une électrode de travail correspondant au substrat conducteur ou semi-conducteur de l'électricité, une contre-électrode correspondant à la microélectrode et une électrode de référence.

## Claims

1. A method for preparing an organic films on a selected area of an electrically conducting or semiconducting substrate, in the presence of a liquid solution containing at least one organic adhesion primer and at least one radically polymerizable monomer different from the organic adhesion primer, by applying an electric potential to the substrate in the presence of a polarized microelectrode.

2. The method according to claim 1, **characterized in that** said method comprises the following steps:
a) positioning a microelectrode near the surface of the selected area;
b) putting a liquid solution comprising at least one organic adhesion primer and at least one radically polymerizable monomer, different from said adhesion primer, in contact with at least said selected area;
c) polarizing said microelectrode and the surface of said substrate, the electric potential of the surface being more cathodic than the reduction potential of the organic adhesion primer used in step (b),
the sequence of steps being either (a), (b) and (c), or (a), (c) and (b).

3. The method according to any one of claims 1 or 2, **characterized in that** said substrate has an inorganic surface, advantageously formed by a material chosen among metals, noble metals, corroding metals, transition mentals, metal alloys and semiconducting materials.

4. The method according to any one of claims 1 to 3, **characterized in that** said microelectrode is chosen from the group consisting of an ultramicroelectrode (UME), the probe of a scanning tunnelling microscope (STM), the probe of a scanning electrochemical microscope (SECM), and the probe of an electrochemical atomic force microscope (el-AFM).

5. The method according to any one of the claims 2 to 4, **characterized in that**, during said step (a), said microelectrode is placed at the vertical of the surface of said selected area.

6. The method according to any one of the preceding claims, **characterized in that** said organic adhesion primer is a cleavable aryl salt chosen from the group consisting of aryl diazonium salts, aryl ammonium salts, aryl phosphonium salts, aryl iodonium salts, and aryl sulfonium salts.

7. The method according to any one of the preceding claims, **characterized in that** said organic adhesion primer is a compound of the following formula (I):
R-N₂⁺, A⁻ (I)
in which:
- A represents a monovalent anion advantageously chosen among inorganic anions, halogenoborates and organic anions, and
- R represents an aryl group advantageously chosen from aromatic or heteroaromatic carbonaceous structures, possibly mono- or polysubstituted, made up of one or several aromatic or heteroaromatic cycles each including 3 to 8 atoms, the heteroatom(s) being able to be N, O, P or S, the substituent(s) being able to contain one or several heteroatoms or Cl to C6 alkyl groups.

8. The method according to any one of the preceding claims, **characterized in that** said organic adhesion primer is chosen from the group consisting of phenyldiazonium tetrafluoroborate, 4-nitrophenyldiazonium tetrafluoroborate, 4-bromophenyldiazonium tetrafluoroborate, 4-aminophenyldiazonium chloride, 2-ethyl-4-chlorophenyldiazonium chloride, 4-benzoylbenzenediazonium tetrafluoroborate, 4-cyanophenyldiazonium tetrafluoroborate, 4-carboxyphenyldiazonium tetrafluoroborate, 4-acetamidophenyldiazonium tetrafluoroborate, 4-phenylacetic diazonium acid tetrafluoroborate, 2-methyl-4-[(2-methylphenyl)diazenyl]benzenediazonium sulfate, 9,10-dioxo-9,10-dihydro-1-anthracenediazonium chloride, 4-nitronaphtalenediazonium tetrafluoroborate and naphtalenediazonium tetrafluoroborate.

9. The method according to any one of the preceding claims, **characterized in that** said radically polymerizable monomer is a molecule including at least one ethylene-type bond, advantageously of the following formula (II): 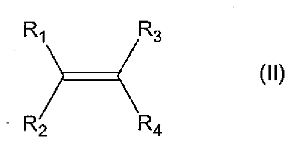 in which groups R₁ to R₄, identical or different, represent a non-metal monovalent atom such as a halogen atom, a hydrogen atom, a saturated or unsaturated chemical group, such as an alkyl group, an aryl group, a -COOR₅ or -OC (O) R₅ group in which R₅ represents a hydrogen atom or a C₁-C₁₂ alkyl group and preferably a C₁-C₆ alkyl group, a nitrile, a carbonyl, an amine or an amide.

10. The method according to any one of the preceding claims, **characterized in that** said radically polymerizable monomer is chosen from the group consisting of vinyl esters such as vinyl acetate, acrylic acid, acrylonitrile, methacrylonitrile, methyl methacrylate, ethyl methacrylate, butyl methacrylate, propyl methacrylate, hydroxyethyl methacrylate, hydroxypropyl methacrylate, glycidyle methacrylate and their derivatives; acrylamides and in particular aminoethyl, propyl, butyl, pentyl and hexyl methacrylamides, cyanoacrylates, diacrylates and dimethacrylates, tri-acrylates and tri-methacrylates, tetra-acrylates and tetra-methacrylates, styrene and its derivatives, parachloro-styrene, pentafluoro-styrene, N-vinyl pyrrolidone, 4-vinyl pyridine, 2-vinyl pyridine, vinyl, acryloyl or methacryloyl halides, divinylbenzene (DVB), and more generally vinyl or acrylate-, methacrylate-based cross-linking agents, and their derivatives.

11. The method according to any one of the preceding claims, **characterized in that** said liquid solution also contains a solvent.

12. The method according to claim 11, **characterized in that** said solvent is a protic solvent advantageously chosen from the group made up of water, acetic acid, hydroxylated solvents such as methanol and ethanol, liquid glycols with a low molecular weight such as ethyleneglycol, and mixtures thereof.

13. The method according to any one of the preceding claims, **characterized in that** said liquid solution also contains at least one support electrolyte and/or at least one surface active agent.

14. The method according to any one of the claims 2 to 13, **characterized in that** said electric potential in step (c) is close to the reduction potential of the adhesion primer.

15. The method according to any one of the claims 2 to 14, **characterized in that** said electric potential in step (c) is up to 50% higher than the reduction potential of the adhesion primer.

16. The method according to any one of the claims 2 to 15, **characterized in that** said method includes an additional step of moving said microelectrode close to said selected area.

17. The method according to any one of the claims 2 to 16, **characterized in that** said method includes an additional step of functionalizing the prepared organic film.

18. Insulating organic film grafted on a conducting or semiconducting substrate, capable of being prepared using a method as defined in any one of claims 1 to 17, **characterized in that** the thickness of said film has at least one inner area with a maximum height h(i) and an outer area with a maximum height h(e), with h(i)<h(e), separated by a hollow area with a maximum height h(c) with h(c)<h(i).

19. The method according to any one of claims 1 to 17, **characterized in that** said method is done in an electrolytic cell with three electrodes with a working electrode corresponding to the electrically conducting or semiconducting substrate, an auxiliary electrode corresponding to the microelectrode, and a reference electrode.

## Patentansprüche

1. Verfahren zur Herstellung eines organischen Films auf einem ausgewählten Bereich eines elektrisch leitenden oder halbleitenden Substrats in Gegenwart einer flüssigen Lösung, die wenigstens einen organischen Haftgrund und wenigstens ein von dem organischen Haftgrund verschiedenes, radikalisch polymerisierbares Monomer enthält, durch Anlegen eines elektrischen Potentials an das Substrat in Gegenwart einer polarisierten Mikroelektrode.

2. Verfahren gemäß Anspruch 1, **dadurch gekennzeichnet, dass** das Verfahren die folgenden Schritte umfasst:
a) Positionieren einer Mikroelektrode in der Nähe des ausgewählten Bereichs,
b) In-Kontakt-bringen einer flüssigen Lösung, die wenigstens einen organischen Haftgrund und wenigstens ein von diesem Haftgrund verschiedenes, radikalisch polymerisierbares Monomer umfasst, mit wenigstens diesem ausgewählten Bereich,
c) Polarisierung dieser Mikroelektrode und der Oberfläche dieses Substrats, wobei das elektrische Potential der Oberfläche kathodischer als das Reduktionspotential des in Schritt (b) eingesetzten organischen Haftgrunds ist,
wobei die Reihenfolge der Schritte entweder (a), (b) und (c) oder (a), (c) und (b) ist.

3. Verfahren gemäß einem der Ansprüche 1 oder 2, **dadurch gekennzeichnet, dass** das Substrat eine anorganische Oberfläche aufweist, die sich vorteilhafterweise aus einem Material zusammensetzt, das aus Metallen, Edelmetallen, oxidierten Metallen,
Übergangsmetallen, Metalllegierungen und Halbleitermaterialien ausgewählt ist.

4. Verfahren gemäß einem der Ansprüche 1 bis 3, **dadurch gekennzeichnet, dass** die Mikroelektrode aus der Gruppe ausgewählt ist, die sich aus einer Ultramikroelektrode (UME), der Sonde eines Rastertunnelmikroskops (STM), der Sonde eines Rasterelektronenmikroskops (SECM) und der Sonde eines Rasterkraftmikroskops im elektrochemischen Modus (el-AFM) zusammensetzt.

5. Verfahren gemäß einem der Ansprüche 2 bis 4, **dadurch gekennzeichnet, dass** während des Schritts (a) die Mikroelektrode senkrecht zur Oberfläche des ausgewählten Bereichs angebracht ist.

6. Verfahren gemäß einem der vorangehenden Ansprüche, **dadurch gekennzeichnet, dass** der organische Haftgrund ein spaltbares Arylsalz ist, das aus der Gruppe ausgewählt ist, die sich aus Aryldiazoniumsalzen, Arylammoniumsalzen, Arylphosphoniumsalzen, Aryliodoniumsalzen und Arylsulfoniumsalzen zusammensetzt.

7. Verfahren gemäß einem der vorangehenden Ansprüche, **dadurch gekennzeichnet, dass** der organische Haftgrund eine Verbindung der folgenden Formel (I) ist:
R-N₂⁺, A⁻ (I)
worin
- A ein einwertiges Anion darstellt, das vorteilhafterweise aus anorganischen Anionen, Halogenboraten und organischen Anionen ausgewählt ist, und
- R eine Arylgruppe darstellt, die vorteilhafterweise aus aromatischen oder heteroaromatischen, gegebenenfalls einfach oder mehrfach substituierten Kohlenstoffstrukturen ausgewählt ist, die sich aus einem oder mehreren aromatischen oder heteroaromatischen Cyclen zusammensetzen, die jeweils 3 bis 8 Atome aufweisen, wobei das oder die Heteroatome N, O, P oder S sein können, und der oder die Substituenten ein oder mehrere Heteroatome oder C1- bis C6-Alkylgruppen enthalten können.

8. Verfahren gemäß einem der vorangehenden Ansprüche, **dadurch gekennzeichnet, dass** der organische Haftgrund aus der Gruppe ausgewählt ist, die sich aus Phenyldiazoniumtetrafluorborat, 4-Nitrophenyldiazoniumtetrafluorborat, 4-Bromphenyldiazoniumtetrafluorborat, 4-Aminophenyldiazoniumchlorid, 2-Methyl-4-chlorphenyldiazoniumchlorid, 4-Benzoylbenzoldiazoniumtetrafluorborat, 4-Cyanphenyldiazoniumtetrafluorborat, 4-Carboxyphenyldiazoniumtetrafluorborat, 4-Acetamidophenyldiazoniumtetrafluorborat, 4-Phenylessigsäurediazoniumtetrafluorborat, 2-Methyl-4-[(2-methylphenyl)diazenyl]benzoldiazoniumsulfat, 9,10-Dioxo-9,10-dihydro-1-anthracendiazoniumchlorid, 4-Nitronaphthalindiazoniumtetrafluorborat und Naphthalindiazoniumtetrafluorborat zusammensetzt.

9. Verfahren gemäß einem der vorangehenden Ansprüche, dadurch gekennzeichnen, dass das radikalisch polymerisierbare Monomer ein Molekül ist, das wenigstens eine Bindung des Ethylentyps, vorteilhafterweise der folgenden Formel (II), aufweist: 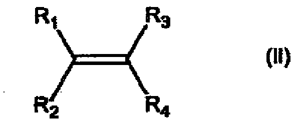 worin die Gruppen R₁ bis R₄, die gleich oder verschieden sind, ein einwertiges Nichtmetallatom wie etwa ein Halogenatom, ein Wasserstoffatom, eine gesättigte oder ungesättigte chemische Gruppe wie etwa eine Alkylgruppe, Arylgruppe, eine Gruppe -COOR₅ oder -OC(O)R₅, worin R₅ ein Wasserstoffatom oder eine C₁-C₁₂-und vorzugsweise C₁-C₆-Alkylgruppe darstellt, eine Nitril-, Carbonyl-, Amin- oder Amidgruppe darstellt.

10. Verfahren gemäß einem der vorangehenden Ansprüche, **dadurch gekennzeichnet, dass** das radikalisch polymerisierbare Monomer aus der Gruppe ausgewählt ist, die sich aus Vinylestern wie etwa Vinylacetat, Acrylsäure, Acrylnitril, Methacrylnitril, Methylmethacrylat, Ethylmethacrylat, Butylmethacrylat, Propylmethacrylat, Hydroxyethylmethacrylat, Hydroxypropylmethacrylat, Glycidylacrylat und ihren Derivaten; Acrylamiden und insbesondere Aminoethyl-, Propyl-, Butyl-, Pentyl- und Hexylmethacrylamiden, Cyanacrylaten, Diacrylaten und Dimethacrylaten, Triacrylaten und Trimethacrylaten, Tetraacrylaten und Tetramethacrylaten, Styrol und seinen Derivaten, p-Chlorstyrol, Pentafluorstyrol, N-Vinylpyrrolidon, 4-Vinylpyridin, 2-Vinylpyridin, Vinyl-, Acryloyl- oder Methacryloylhalogeniden, Divinylbenzol (DVB) und allgemeiner vinylischen Vernetzern oder solcher auf Acrylat- oder Methacrylatgrundlage und ihren Derivaten zusammensetzt.

11. Verfahren gemäß einem der vorangehenden Ansprüche, **dadurch gekennzeichnet, dass** die flüssige Lösung außerdem ein Lösungsmittel enthält.

12. Verfahren gemäß Anspruch 11, dadurch gekenntzeichnet, dass das Lösungsmittel ein protisches Lösungsmittel ist, das vorteilhafterweise aus der Gruppe ausgewählt ist, die sich aus Wasser, Essigsäure, hydroxylierten Lösungsmitteln wie Methanol und Ethanol, flüssigen Glykolen mit niederem Molekulargewicht wie etwa Ethylenglykol und ihren Gemischen zusammensetzt.

13. Verfahren gemäß einem der vorangehenden Anspruche, **dadurch gekennzeichnet, dass** die flüssige Lösung außerdem wenigstens einen Trägerelektrolyten und/oder wenigstens ein Tensid enthält.

14. Verfahren gemäß einem der Ansprüche 2 bis 13, **dadurch gekennzeichnet, dass** das elektrische Potential in Schritt (c) nahe dem Reduktionspotential des Haftgrunds liegt.

15. Verfahren gemäß einem der Ansprüche 2 bis 14, **dadurch gekennzeichnet, dass** das elektrische Potential in Schritt (c) bis zu 50 % höher als das Reduktionspotential des Haftgrunds ist.

16. Verfahren gemäß einem der Ansprüche 2 bis 15, **dadurch gekennzeichnet, dass** das Verfahren einen zusätzlichen Schritt des Bewegens der Mikroelektrode in die Nähe des ausgewählten Bereichs umfasst.

17. Verfahren gemäß einem der Ansprüche 2 bis 16, **dadurch gekennzeichnet, dass** das Verfahren einen zusätzlichen Schritt der Funktionalisierung des hergestellten organischen Films umfasst.

18. Auf ein leitendes oder halbleitendes Substrat aufgebrachter organischer Film, der durch ein wie in einem der Ansprüche 1 bis 17 definiertes Verfahren hergestellt werden kann, **dadurch gekennzeichnet, dass** die Dicke des Films wenigstens einen inneren Bereich mit einer Maximalhöhe h(i) und einen äußeren Bereich mit einer Maximalhöhe h(e) und mit h(i) < h(e) aufweist, die durch einen hohlen Bereich mit einer Maximalhöhe h(c) mit h(c) < h(i) getrennt sind.

19. Verfahren gemäß einem der Ansprüche 1 bis 17, **dadurch gekennzeichnet, dass** das Verfahren in einer Elektrolysezelle mit 3 Elektroden, mit einer dem elektrisch leitenden oder halbleitenden Substrat entsprechenden Arbeitselektrode, einer der Mikroelektrode entsprechenden Gegenelektrode und einer Bezugselektrode, durchgeführt wird.
